# EUROPÄISCHE PATENTSCHRIFT

(11) **EP 1 706 431 B1**
(45) Veröffentlichungstag und Bekanntmachung des Hinweises auf die Patenterteilung: **23.03.2016**
(21) Anmeldenummer: 05706959.3
(22) Anmeldetag: 21.01.2005
(51) Int. Cl.: C08F 2/22, C08F 6/14, H01B 1/12, C08L 79/02, C09D 5/24

(54) **DISPERSIONEN INTRINSISCH LEITFÄHIGER POLYMERE UND VERFAHREN ZU DEREN HERSTELLUNG**
DISPERSIONS OF INTRINSICALLY CONDUCTIVE POLYMERS, AND METHODS FOR THE PRODUCTION THEREOF
DISPERSIONS DE POLYMERES INTRINSEQUEMENT CONDUCTEURS ET LEUR PROCEDE DE PRODUCTION

(30) Priorität: 23.01.2004 DE 102004003784
(43) Veröffentlichungstag der Anmeldung: 04.10.2006
(73) Patentinhaber: Enthone Inc., West Haven, Connecticut 06516 (US)
(72) Erfinder: WESSLING, Bernhard, 22941 Bargteheide (DE)
(74) Vertreter: UEXKÜLL & STOLBERG
(86) Internationale Anmeldenummer: PCT/EP2005/000595
(87) Internationale Veröffentlichungsnummer: WO 2005/070972

(56) Entgegenhaltungen:
- EP-A- 0 329 768
- EP-A- 0 446 943
- WO-A-94/27297
- US-A- 5 403 913

## Beschreibung

Die vorliegende Erfindung betrifft ein Verfahren zur Herstellung einer stabilen Dispersion, die Teilchen von Polyanilin oder Poly(3,4-ethylendioxythiophen) als intrinsisch leitfähige Polymere enthält.

Als leitfähige Polymere, die auch "intrinsisch leitfähige Polymere" bzw. "organische Metalle" genannt werden, bezeichnet man Stoffe, die aus niedermolekularen Verbindungen (Monomeren) aufgebaut sind, durch Polymerisation mindestens oligomer sind, also mindestens 3 Monomereinheiten enthalten, die durch chemische Bindung verknüpft sind, im neutralen (nicht leitfähigen) Zustand ein konjugiertes n-Elektronensystem aufweisen und durch Oxidation, Reduktion oder Protonierung (was oftmals als "dotieren" bezeichnet wird) in eine ionische Form überführt werden können, die leitfähig ist. Die Leitfähigkeit beträgt mindestens 10⁻⁷ S/cm.

Als Dotierungsmittel werden im Falle der Dotierung durch Oxidation z.B. Jod, Peroxide, Lewis- und Protonensäuren oder im Falle der Dotierung durch Reduktion z.B. Natrium, Kalium, Calcium eingesetzt.

Leitfähige Polymere können chemisch außerordentlich unterschiedlich zusammengesetzt sein. Als Monomere haben sich z.B. Acetylen, Benzol, Napthalin, Pyrrol, Anilin, Thiophen, Phenylensulfid, peri-Naphthalin und andere, sowie deren Derivate, wie Sulfo-Anilin, Ethylendioxythiophen, Thieno-thiophen und andere, sowie deren Alkyl- oder Alkoxy-Derivate oder Derivate mit anderen Seitengruppen, wie Sulfonat-, Phenyl- und andere Seitengruppen, bewährt. Es können auch Kombinationen der oben genannten Monomere als Monomer eingesetzt werden. Dabei werden z.B. Anilin und Phenylensulfid verknüpft und diese A-B-Dimere dann als Monomere eingesetzt. Je nach Zielsetzung können z.B. Pyrrol, Thiophen oder Alkylthiophene, Ethylendioxythiophen, Thieno-thiophen, Anilin, Phenylensulfid und andere miteinander zu A-B-Strukturen verbunden und diese dann zu Oligomeren oder Polymeren umgesetzt werden. Alternativ können auch zwei oder mehr, z. B. drei verschiedene Monomere gemeinsam polymerisiert werden.

Die meisten leitfähigen Polymere weisen einen mehr oder weniger starken Anstieg der Leitfähigkeit mit steigender Temperatur auf, was sie als nicht-metallische Leiter ausweist. Einige wenige Vertreter dieser Stoffklasse zeigen zumindest in einem Temperaturbereich nahe Raumtemperatur ein metallisches Verhalten insofern, als die Leitfähigkeit mit steigender Temperatur sinkt. Eine weitere Methode, metallisches Verhalten zu erkennen, besteht in der Auftragung der sogenannten "reduzierten Aktivierungsenergie" der Leitfähigkeit gegen die Temperatur bei niedrigen Temperaturen (bis nahe 0 K). Leiter mit einem metallischen Beitrag zur Leitfähigkeit zeigen eine positive, Steigung der Kurve bei niedriger Temperatur. Solche Stoffe bezeichnet man als "organische Metalle".

Ein solches organisches Metall ist von Weßling et al. in Eur. Phys. J. E 2, 2000, 207-210 beschrieben worden. Dabei wurde der Übergang vom Zustand eines nicht-metallischen zu einem zumindest teilweise metallischen Leiter durch einen einstufigen Reib- bzw. Dispersionsvorgang nach vollendeter Synthese des intrinsisch leitfähigen Polymers bewirkt, dessen verfahrenstechnische Grundlage in der EP-A-0 700 573 beschrieben wird. Hierbei wird durch den Dispersionsvorgang auch die Leitfähigkeit erhöht, ohne dass die chemische Zusammensetzung des verwendeten leitfähigen Polymeren wesentlich verändert wurde.

Dem Stand der Technik sind zahlreiche Bemühungen zu entnehmen, die Leitfähigkeit deutlich zu erhöhen. Während normalerweise ein Leitfähigkeitsbereich von um und unter 5 S/cm nach der Synthese erreicht wird, erzielt man durch verschiedene Vorgehensweisen Werte von einigen 10, gelegentlich auch einigen 100 S/cm. Leitfähigkeitswerte von einigen 1.000 oder 10.000 S/ cm, wie sie von Naarmann und Theophilou in Synthet. Met., 22, 1 (1987) vor 15 Jahren mit Polyacetylen aufgrund eines speziellen Polymerisationsverfahrens und anschließendem Verstrecken erreicht wurden, konnten mit anderen leitfähigen Polymersystemen bisher nicht erreicht werden. Das Verfahren von Naarmann et al. weist allerdings den Nachteil auf, dass es schwer durchzuführen und schwer zu reproduzieren ist. Außerdem führt es zu einem Produkt, das nicht luft- und oxidationsstabil und außerdem nicht weiterverarbeitbar ist.

Abgesehen von dem oben erwähnten einstufigen Verfahren der EP-A-0 700 573 sind die Verfahren des Standes der Technik dadurch gekennzeichnet, daß ausgewählte Dotierungsmittel oder ausgewählte Kombinationen von Dotierungsmitteln verwendet werden oftmals gefolgt von einem Verstrecken des gewonnenen Produktes. Einen guten Überblick über diese Verfahren geben neben Synthetic Metal (Special Issue, Vol. 65, Nos. 2-3, August 1994) auch die Beiträge von Epstein et al. und Heeger et al. (Handbook of Conductive Polymers, Skotheim, Eisenbanner, Reynolds (Hrsg.), M. Dekker, N.Y. 1998).

Fig 3.2 in Kohlman u. Epstein im soeben genannten Handbuch gibt einen sehr guten Überblick über die bisher erzielten Leitfähigkeitswerte, wobei die höheren Werte um 10² S/cm generell erst nach Verstrecken einer aus dem intrinsich leitfähigen Polymer hergestellten Folie oder Faser erreicht werden.

Im Falle des Polyanilins geht man dabei z.B. so vor, daß man Anilin in wäßriger Salzsäure polymerisiert, wobei das ChloridSalz des protonierten Polyanilins entsteht. Dieses wird mittels einer starken Base, z.B. Ammoniak, zur Entfernung von HCl neutralisiert. Man erhält dadurch die sogenannte Emeraldinbase. Diese wird mit Kamphersulfonsäure in Gegenwart des giftigen m-Kresols in Xylol oder Chloroform gelöst. Anschließend wird aus dieser Lösung ein Film gegossen, der danach verstreckt wird. Nach dem Verstrecken erhält man eine Leitfähigkeit von einigen 10² S/cm.

Dieses als Sekundär-Dotierung ("secondary doping") bezeichnete Verfahren, siehe Mac Diarid und Epstein, Synth. Met. (Special Issue) Vol. 65, Nos. 2-3, August 1994, S. 103-116, wird in zahlreichen Varianten durchgeführt, u.a. in Arbeiten von Holland, Monkman et al. J. Phys. Condens. Matter 8 (1996), 2991-3002 oder Dufour, Pron et al., Synth. Met. (2003), No. 133-136, S. 63-68, wobei die Säure und das Sekundär-Dotierungsmittel ("secondary dopant") variiert werden. Mattes et al-, US-A-6 123 883, haben in weiteren Varianten dieses Verfahrens Fasern erzeugt, die nach Verstrecken ebenfalls eine Leitfähigkeit von einigen 10² S/cm aufweisen.

Der oben erörterte Stand der Technik zeigt, dass Kamphersulfonsäure als das Dotierungsagens der Wahl angesehen wird.

Ebenso wird klar, daß die Mehrheit der Forscher echte Lösungen von leitfähigen Polymeren herzustellen versucht und anstrebt, die Kristallinität nach Entfernung des Lösungsmittels zu maximieren.

Angesichts der zahlreichen Veröffentlichungen ist es erstaunlich, daß keine Produkte mit diesen Leitfähigkeits-Eigenschaften kommerziell erhältlich sind. Dies liegt vor allem daran, daß die Leitfähigkeit nicht ausreichend reproduzierbar ist, aber auch daran, dass giftige Lösungsmittel bzw. Dispergiermittel verwendet werden müssen und dass das Produkt noch verstreckt werden muß.

Das oben erwähnte Dispersionsverfahren der EP-A-0 700 573, das diese Nachteile nicht aufweist, hat sich jedoch ebenfalls nicht als optimale Lösung erwiesen, Endprodukte mit einer Leitfähigkeit von deutlich mehr als 100 S/cm kommerziell bereitzustellen. Hinzu kommt, dass das Endprodukt bevorzugt ein thermoplastisches Polymerblend ist, das nur eine Konzentration an leitfähigem Polymer von in der Regel knapp unter 40 % aufweist. Die weitere Verarbeitung zu Produkten, z.B. Schichten, die entweder vorwiegend aus dem leitfähigen Polymer bestehen oder eine beliebige Matrix mit einer beliebigen Konzentration (entsprechend den Anforderungen an das damit herzustellende Produkt) enthalten, ist daher nicht möglich.

Es besteht daher nach wie vor die Aufgabe, ein Verfahren bereitzustellen, mit dem intrinsisch leitfähige Polymere sowie Produkte, die diese enthalten, hergestellt werden können, in denen das leitfähige Polymer eine hohe Leitfähigkeit (> 10² S/cm) ohne vorheriges Verstrecken aufweist, und mit dem eine nahezu unbeschränkte Formulierungsfreiheit besteht, so dass Substrate unterschiedlichster Natur und Form mit einem solchen leitfähigen Polymer beschichtet werden können bzw. Produkte unterschiedlichster Form und Zusammensetzung aus diesem hergestellt werden können.

Die obigen Aufgaben werden erfindungsgemäß durch ein Verfahren zur Herstellung einer stabilen Dispersion gelöst, die Teilchen mindestens eines intrinsisch leitfähigen Polymers enthält, das ausgewählt ist aus der Gruppe bestehend aus Polyanilin und Poly(3,4-ethylendioxythophen), wobei die Teilchengröße im Mittel (Gewicht) weniger als 1 µm beträgt, und die dadurch gekennzeichnet ist, dass das Dispersionsmittel bei Raumtemperatur eine Flüssigkeit mit einer relativen Viskosität von <10.000 ist und eine aus dieser Dispersion gebildete

Schicht, Folie oder Platte nach Entfernen des Dispersionsmittels eine Leitfähigkeit von > 100 S/cm aufweist.

Bei dem erfindungsgemäßen Verfahren zur Herstellung der vorstehend genannten Dispersion wird in dieser Reihenfolge
(a) aus Monomeren ein intrinsisch leitfähiges Polymer hergestellt, wobei die Temperatur während der Polymerisation so geregelt wird, dass sie nicht über einen Wert von mehr als 5 °C oberhalb der Starttemperatur ansteigt, und die Geschwindigkeit des Temperaturanstiegs während Stufe (a) zu keiner Zeit während der Polymerisation mehr als 1 K/Minute beträgt,
(b) das Produkt aus Stufe (a) in Gegenwart eines gegenüber dem leitfähigen Polymer inerten, nicht elektrisch leitfähigen, nicht-polymeren polaren Stoffes unter Anwendung ausreichender Scherkräfte aufgerieben und/oder dispergiert wird, wobei das Gewichtsverhältnis zwischen dem leitfähigen Polymer und dem polaren Stoff 2:1 bis 1:10 beträgt,
(c) das Produkt aus Stufe (b) in einem bei Raumtemperatur flüssigen Dispersionsmittel mit einer relativen Viskosität von <10.000 dispergiert wird, wobei das Gewichtsverhältnis zwischen dem leitfähigen Polymer und dem Dispersionsmittel kleiner als 1 : 10 ist.

Weitere bevorzugte Ausführungsformen der vorliegenden Erfindung ergeben sich aus den abhängigen Patentansprüchen.

Der erfindungsgemäß erreichte Erfolg ist insbesondere deshalb als überraschend anzusehen, weil im Allgemeinen ein Dispergiervorgang als schädlich für die Leitfähigkeit des Polymers angesehen wird. Denn die meisten Fachleute vermuten, dass die Ketten der leitfähigen Polymere bei der Dispergierung zerrissen werden, sodass die Elektronenleitung (entlang dieser Ketten) verschlechtert wird. Deshalb wird von ihnen wie oben zum Stand der Technik ausgeführt angestrebt, echte Lösungen von leitfähigen Polymeren herzustellen. Daneben wird auch die Verwendung von Dispergiermitteln und Zusatzstoffen im Allgemeinen als nachteilig angesehen, da sie die Barrieren für den Transport der Elektronen erhöhen und verstärken könnten. Bei dem erfindungsgemäßen Verfahren wurden nun sogar zwei Dispergierschritte vorgeschlagen.

Ferner ist es als überraschend anzusehen, dass bei dem erfindungsgemäßen Verfahren nach der ersten Dispergierstufe (Stufe (b)) nicht unbedingt eine vollständige Entfernung des gegebenenfalls vorhandenen nicht-leitenden Polymers notwendig ist, wie nachstehend näher erläutert wird.

Die erfindungsgemäßen Dispersionen weisen ferner den Vorteil auf, dass sie stabil sind. Stabile erfindungsgemäße Dispersionen müssen daher nach ihrer Herstellung nicht sofort oder zumindest nach kurzer Zeit weiterverarbeitet werden, sondern können über längere Zeit, z. B. über mehrere Stunden, z. B. 5 - 10 Stunden, oder Tage, z. B. 1 - 3 Tage oder 4 - 6 Tage, oder Wochen, z. B. mehr als eine Woche bis zu mehreren Monaten, z. B. mehr als 1 Monat, vorzugsweise mehr als 3 Monate gelagert werden. Die vorstehenden Angaben zur Lagerung beziehen sich auf Umgebungsbedingungen.

Erfindungsgemäße intrinsisch leitfähige Polymere sind Polyanilin (PAni) und Poly(3,4-ethylendioxythiphene) (PEDT).

Am meisten bevorzugt ist Polyanilin.

In Stufe (a) des erfindungsgemäßen Verfahrens wird im Allgemeinen nach den Vorschriften der EP-A-0 329 768 dispergierbares, intrinsisch leitfähiges Polymer, vorzugsweise Polyanilin, hergestellt. Insbesondere wird auf die in der EP-A-0 329 768 verwendeten Definitionen Bezug genommen. Diese gelten auch hierin im Zusammenhang mit der Durchführung von Stufe (a) des erfindungsgemäßen Verfahrens.

Erfindungsgemäß erfolgt die Steuerung der Temperatur in Stufe (a) des erfindungsgemäßen Verfahrens, also während der Polymerisation, so, dass nicht nur wie in der EP-A-0 329 768 gefordert die Temperatur während der Polymerisation nicht über einen Wert von mehr als 5 °C oberhalb der Starttemperatur ansteigt, sondern auch die Geschwindigkeit des Temperaturanstiegs zu keiner Zeit während der Polymerisation mehr als 1 K/Minute beträgt. Bevorzugt ist die Führung der Reaktion so, dass der Temperaturanstieg < 0,5 °C ist, wobei die Geschwindigkeit des Temperaturanstieges zu keiner Zeit mehr als 0,2 °K/min. beträgt.

Die erfindungsgemäß nach Stufe (a) erhaltenen (Zwischen-)Produkte weisen im Allgemeinen eine Leitfähigkeit von etwa 5 S/cm auf.

Die Zwischenprodukte aus Stufe (a) fallen im Allgemeinen als Pulver an, wobei 80 Gew.-% der Primärteilchen kleiner als 500 nm sind und wobei diese zu nicht mehr als 20 Gew.-% zu Aggregaten von mehr als 1 µm aggregiert sind. Dies kann man rasterelektronenmikroskopischen Aufnahmen am getrockneten Feststoff und lichtmikroskopischen Untersuchungen von Dispersionen in Polymerblends entnehmen.

Die lichtmikroskopische Untersuchung erfolgt, indem der erfindungsgemäße Feststoff direkt oder als Konzentrat mit Hilfe eines Innenmischers in einem Testpolymer dispergiert wird. Als Testpolymere eignen sich PCL oder PVC. Die Konzentration des zu dispergierenden Stoffs beträgt üblicherweise 0,5 Gew.-%. Die Mischung wird zu einem dünnen Film ausgepreßt. Man erkennt bei erfindungsgemäßen Rohstoffen eine gleichmäßig stark gefärbte, semi-transparente Substanz; die Färbung rührt von den dispergierten Primärteilchen her. Zusätzlich erkennt man in einigen Fällen undispergierte Teilchen von 0,5-1 µm sowie einzelne gröbere Teilchen.

Nach Polymerisation und Aufarbeitung - wobei es nicht wesentlich ist, ob das erhaltene Polymer bereits vollständig trocken ist oder nicht - wird das Polymer in Stufe (b) des erfindungsgemäßen Verfahrens in Gegenwart eines nicht-polymeren polaren Stoffes dispergiert bzw. mit diesem verrieben. Dabei hat der polare Stoff (der auch als "Dispersionshilfsstoff" bezeichnet werden könnte) folgende Eigenschaften:
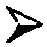 er hat eine Oberflächenspannung von mehr als 30 dyn/cm,
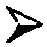 er ist nicht elektrisch leitfähig (d.h. er weist eine elektrische Leitfähigkeit von weniger als 10⁻⁶ S/cm auf),
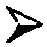 er kann flüssig oder fest sein,
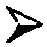 er wirkt gegenüber dem eingesetzten leitfähigen Polymer inert, d.h. geht keine nennenswerten chemischen Reaktionen mit ihm ein; vor allem sind oxidative oder reduktive sowie Säure-Base-Reaktionen nicht erwünscht,
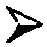 er ist unter gewöhnlichen Bedingungen nicht unbedingt ein Dispersionshilfsmittel und fällt nicht unter die Stoffklasse der Tenside.

Beispiele für solche polaren Stoffe sind
a) Festkörper: Bariumsulfat; Titandioxid, insbesondere ultrafeines Titandioxid mit einer Korngröße von weniger als 300 nm; organische Pigmente wie Pigment Gelb 18;
b) inerte Lösungsmittel: Wasser, DMF, DMSO, γ-Butyrolacton, NMP und andere Pyrrolidon-Derivate, Dioxan, THF;
wobei diese Aufzählung beispielhaft und keineswegs limitierend ist.

Die Dispergierung bzw. das Aufreiben mit dem polaren Stoff kann im Allgemeinen in Dispergiervorrichtungen wie Schnellmischern (z.B. sog. Fluid-Mischern) oder unter Ultraschall, in einer Kugelmühle, Perlmühle, einem Zwei- oder Dreiwalzenstuhl oder einer Hochdruckdispergiervorrichtung (Typ Microfluidics) durchgeführt werden.

In Schnellmischern oder unter Ultraschall beträgt die Verarbeitungszeit mindestens 3 Minuten. In Kugelmühlen, auf Zwei- oder Dreiwalzen-Stühlen oder in anderen Aggregaten hoher Scherkraft wird eine längere Behandlungszeit, z.B. von mindestens 30 Minuten benötigt. Die gleichzeitige Anwendung eines elektrischen Feldes, insbesondere eines elektrischen Wechselfeldes mit Frequenzen zwischen 10 kHz und 10 GHz, kann von Vorteil sein; in diesem Fall werden meist mehr als 24 Stunden benötigt.

Der polare, nicht-leitfähige und gegenüber dem intrinsisch leitfähigen Polymer inerte Stoff wird in einer solchen Menge zugesetzt, daß sich zwischen dem leitfähigen Polymerpulver und dem polaren Stoff ein Gewichts-Verhältnis von 2:1 bis 1:10 ergibt.

Vorzugsweise ist bei der Durchführung von Stufe (b) ferner mindestens ein nicht-leitfähiges Polymer, insbesondere ein thermoplastisches Polymer vorhanden. Zum Beispiel kann Polyethylenterephthalat-Copolymer, kommerziell erhältlich von der Firma Eastman Kodak oder von der Degussa, oder ein Polymethylmethacrylat (PMMA) der Fa. Degussa verwendet werden. Die Anwesenheit des thermoplastischen Polymers erfordert die Durchführung der Dispergierung unter hoher Scherung und bei Temperaturen oberhalb von 50 °C, z.B. bei Temperaturen zwischen 50 und 200 °C oder zwischen 70 und 120 °C, beispielsweise bei etwa 90 °C. Nach dem Abkühlen erhält man dann eine feste Mischung, ein Polymerblend, das zwischen 20 und 60 Gew.-%, vorzugsweise etwa 35 Gew.-% leitfähiges Polymer enthält, bezogen auf die bei Raumtemperatur festen Bestandteile der Produktzusammensetzung aus Stufe (b), die das leitfähige Polymer, den polaren Stoff sowie gegebenenfalls weiteres nicht-leitfähiges Polymer umfasst. Das leitfähige Polymer weist nach Durchführung von Stufe (b) im Allgemeinen Leitfähigkeiten um etwa 60 S/cm auf.

Nach Stufe (b) kann der zugesetzte polare, inerte und nicht-leitfähige Stoff bzw. das ebenfalls vorhandene nicht-leitfähige Polymer durch Waschen oder Extrahieren teilweise oder nahezu vollständig entfernt werden. Vorzugsweise wird dieser Nachbehandlungsschritt nach dem Abschluss von Stufe (b) wie im vorstehenden Absatz beschrieben durchgeführt. Alternativ kann die Nachbehandlung aber auch schon während Stufe (b) einsetzen.

Die Nachbehandlung, die man auch als Konditionierung des Produkts aus Stufe (b) für die nachfolgende Dispergierstufe (c) bezeichnen könnte, hat den Zweck, das Produkt aus Stufe (b) für die nachfolgende Dispergierstufe (c) vorzubereiten (zu konditionieren). Zum Waschen bzw. Extrahieren können die unterschiedlichsten Stoffe verwendet werden, z.B. Aromaten, Alkohole, Ester, Ether, Ketone, z.B. Xylol, Toluol, Ethanol, Isopropanol, Chlorbenzol, Diisopropylether und dergleichen. Es können auch Lösemittel und Hilfsstoffe zugesetzt werden, die die nachfolgende Dispergierstufe (c) unterstützen. Dies können z. B. Xylol oder Chlorbenzol sowie Dodecylbenzolsulfonsäure (DBSH) sein.

Vorzugsweise wird während der Nachbehandlung des Produkts aus Stufe (b) der Anteil des leitfähigen Polymers in dem Produkt, bezogen auf die bei Raumtemperatur festen Bestandteile desselben, um mindestens 5 Gew.-%, vorzugsweise 10 Gew.-%, insbesondere 20 Gew.-% erhöht.

Alternativ kann ohne Reduzierung oder Entfernung des polaren Stoffes bzw. des thermoplastischen Polymers weitergearbeitet werden, z.B. wenn die weitere Verarbeitung und die Anwendung des leitfähigen Polymeren nicht durch die Anwesenheit des zugesetzten Stoffes gestört wird. Die Leitfähigkeit des Polymerpulvers wird durch die Anwesenheit des polaren Stoffes bzw. des thermoplastischen Polymers nicht beeinträchtigt.

Bevorzugte Konzentrationen an leitfähigem Polymer, die nach Stufe (b) und Nachbehandlung erreicht werden, liegen zwischen 45 und 99 Gew.-%, vorzugsweise 55 bis 70 Gew.-%, bezogen auf die gesamte Zusammensetzung. Zum Beispiel kann das Produkt aus Stufe (b) eine feuchte Paste mit einem relativ hohen Anteil an Lösemittel bzw. Hilfsstoff sein, der in der Nachbehandlung verwendet wurde. Es ist also nicht erfindungswesentlich, während der Nachbehandlung verwendete Stoffe vor der Durchführung von Stufe (c) des erfindungsgemäßen Verfahrens weitestgehend zu entfernen, jedoch kann dies in der industriellen Praxis von Vorteil sein.

Stufe (c) des erfindungsgemäßen Verfahrens ist eine Dispergierung, die in einem organischen oder wässrigen Medium (Dispersionsmittel) stattfindet und im Allgemeinen bei Raumtemperatur oder davon nur unwesentlich verschiedener Temperatur durchgeführt wird. Als Dispersionsaggregate kommen insbesondere solche Maschinen in Frage, die in der Lage sind, hohe Dispersionsenergie in das System einzubringen. Dies können z. B. Anlagen wie Ultraturrax, Disolver, Perlmühlen, Kugelmühlen, Hochdruckdispersionsapparate wie solche vom Typ Microfluidics, oder Ultraschallanlagen sein.

Als Dispersionsmittel sind insbesondere solche Lösemittel geeignet, die eine Oberflächenspannung von mindestens 25 mN/m aufweisen. Die erfindungsgemäßen Dispersionsmittel sind bei Raumtemperatur flüssig und weisen relative Viskositäten von < 10.000, z.B. < 5.000, und insbesondere < 1.000 auf.

Beispiele für erfindungsgemäße Dispersionsmittel sind Xylol, Chlorphenol, Dichloressigsäure, N-Methylpyrrolidon, Dimethylsulfoxid, Octanol, oder Benzylalkohol oder höhere Alkohole, z. B. C₉ - C₂₀-Alkohole paraffinischer oder aromatischer Natur, bzw. Mischungen derselben.

Das bzw. die Dispersionsmittel werden dem Produkt aus Stufe (b) des erfindungsgemäßen Verfahrens in einer solche Menge zugesetzt, das, bezogen auf das intrinsisch leitfähige Polymer, ein Überschuss (Gewichtsverhältnis) von Dispergiermittel vorliegt. Insbesondere ist das Gewichtsverhältnis zwischen dem leitfähigen Polymer und dem Dispergiermittel kleiner als 1 : 10, vorzugsweise kleiner als 1 : 15, z.B. 1 : 18.

Als Produkt von Stufe (c) wird im Allgemeinen eine hochviskose Paste oder eine flüssige, niederviskose Dispersion mit einer Konzentration des leitfähigen Polymeren von im Allgemeinen nicht mehr als etwa 10 Gew.-%, bezogen auf die gesamte Dispersion, erhalten. Vorzugsweise enthält die nach Stufe (c) erhaltene Dispersion geringe Anteile der in Stufe (b) verwendeten polaren Stoffe und nicht-leitfähigen Polymere, je nach dem Umfang der Konditionierung.

Zur Vorbereitung der Verwendung der erfindungsgemäßen Dispersion bei der Herstellung von Formteilen, selbsttragenden Folien oder Beschichtungen mit elektrischer Leitfähigkeit können nach Stufe (c) oder alternativ während Stufe (c) Hilfs- und Zusatzstoffe zugesetzt werden. Dies können z.B. Viskositätsregler, Benetzungshilfen, Matrixpolymere wie Lackbindemittel, filmbildende Stoffe, Stabilisatoren, Vernetzungshilfsmittel, Verdunstungsregler wie Verdungstungsbeschleuniger oder Verdunstungshemmer oder weitere Hilfs- und Zusatzstoffe sein. Man erhält dann eine stabile Dispersion, die alle Komponenten enthält, die für die weitere Formgebung und die Eigenschaften des Produktes hilfreich oder entscheidend sind.

Die nach Stufe (c) einschließlich Nachbehandlung und Formulierung erhaltene Dispersion kann dann, gegebenenfalls nach Durchführung weiterer weiterer Dispersions- und Nachbehandlungsschritte, zur Herstellung von Formteilen, selbsttragenden Folien oder Beschichtungen unterschiedlichster Schichtdicke mit elektrischer Leitfähigkeit verwendet werden (Formgebung).

Die Formgebung kann durch eine Reihe von Verfahren, wie Tauchen, Benetzung durch Tropfen, Sprühen, Spincoaten, Drucken (z.B. Siebdruck, Offsetdruck, Ink-Jet u. a.), Extrudieren, Gießen, Rakeln, Elektrospinnen, und andere erfolgen. Besonders bevorzugt ist die Formgebung durch Tauchen, Gießen, Tropfbenetzung, Spincoaten oder Drucken.

Die so erhaltenen Schichten, Beschichtungen, Folien, Platten oder anderen Form- oder Bauteile weisen nach Entfernen des Dispersionsmittels eine Leitfähigkeit von > 100 S/cm auf, vorzugsweise mindestens 200 S/cm, z. B. größer als 250 S/cm, insbesondere mindestens 500 S/cm, z. B. 200 S/cm oder 500 S/cm, z.B. 300 oder 500 bis 1000 S/cm.

Daneben sind die Teilchen der erfindungsgemäßen Dispersion dadurch gekennzeichnet, dass das Röntgendiffraktogramm z.B. für Polyanilin ("dotiert" mit p-Toluolsulfonsäure) keine scharfen Reflexe aufweist und daß bei 2θ = ca 3° ein Reflex sichtbar ist, die bei Polyanilin aus erfindungsgemäßen Dispersionen eine verglichen mit der breiten Reflektion bei 2θ = ca 19° mindestens ebenso hohe Intensität aufweist. Im Vergleich dazu zeigt das "rohe" Pulver aus Stufe (a) normalerweise dort keinen Peak bzw. nur sehr schwache Intensität, das Polyanilin nach dem ersten Reib-/Dispergiervorgang gemäß Stufe (b) zeigt immerhin eine deutliche Reflektion, diese ist aber im Vergleich zum Peak bei ca 19° schwächer.

Nach der zweiten Dispergierung gemäß Stufe (c) und nur für solche Dispersionen, die erfindungsgemäß ausgeführt werden und dementsprechend eine Leitfähigkeit von > 100 S/cm erlauben, wird dieser Reflex der eindeutig stärkste, und die anderen Reflexe werden mit steigender Leitfähigkeit zunehmend schwächer.

Durch die Formgebung bzw. Weiterverarbeitung können antistatische oder leitfähige Beschichtungen, transparente und nicht transparente Elektroden, Lacke, die für die EMI-Abschirmung geeignet sind, Kontakte in der Elektronik oder "Source", "Drain" oder "Gate" in Feldeffekttransistoren hergestellt werden, ebenso Antennen, Schwingkreise, logische Schaltungen, Leiter bzw. Gegenpole in Kondensatoren, Elektrolytkondensatoren oder sogenannte "Supercapacitors" und viele Funktionen wie die, die in der konventionellen Elektrotechnik und Elektronik von konventionellen Metallen, hoch dotierten Halbleitern der Elektroden bzw. redox-aktiven Schichten erfüllt werden, erfüllen.

Die Gegenstände, die das durch Trocknung oder durch Durchführung eines der oben beschriebenen Formgebungsverfahren zugänglich sind und das aus der erfindungsgemäßen Dispersion erhältliche leitfähige Polymer enthalten, sind eine Ausführungsform der Erfindung. Vorzugsweise bestehen die oben genannten Gegenstände im wesentlichen aus dem leitfähigen Polymer.

Beispielhaft seien folgende Anwendungen genannt:
- als elektrische Leiter (z.B. elektrischer Kontakt, elektrische Zuleitung, als Druckschalter, Elektroden etc.) oder Halbleiter,
- als Schutz vor statischen Aufladungen,
- zur Abschirmung von elektromagnetischen Wellen (EMI-Abschirmung),
- zur Absorption von Mikrowellen (für Abschirmungs- oder Erwärmungszwecke),
- zur Herstellung von Kondensatoren oder als Ersatz der Elektrolyte in Elektrolytkondensatoren,
- als Elektrode oder Elektrodenbestandteil in sogenannten "Supercapacitors" (Dieser Typ Kondensator wird auch als Doppelschichtkondensator (DLK) bezeichnet und ist durch die Ausbildung einer elektrischen Doppelschicht, oft auf Basis von Ruß und/oder Graphit gekennzeichnet. Im Englischen wird häufig auch von "electrochemical double layer capacitors" gesprochen.),
- zur Herstellung von Halbleiterbauelementen wie Dioden, Transistoren u.a.,
- als Photoleiter oder in der photovoltaischen Energieumwandlung,
- in Zusammensetzungen mit Metallen oder Halbmetallen oder in Zusammensetzungen mit verschiedenen leitfähigen Polymeren unter Ausnutzung des thermoelektrischen Effektes als Temperaturfühler (IR-Absorption) oder in der thermovoltaischen Energieumwandlung,
- als Sensoren,
- als Indikatoren, z.B. durch Elektrochromismus, Mikrowellenabsorption, thermoelektrische Kraft etc.,
- in Elektrolyse- oder Elektrosyntheseprozessen als elektrokatalytische Elektroden (z.B. in Brennstoffzellen),
- in der Photoelektrokatalyse oder -synthese und bei photovoltaischen Effekten,
- im Korrosionsschutz, z.B. beim anodischen Korrosionsschutz,
- als Elektroden in Akkumulatoren,
- als UV- und lichtstabile Pigmente.
- als Elektrode oder Zuleitung in Elektrolumiszenz-Anordnungen (z. B. als nicht-transparente sog. "Back-" oder als transparente sog. "Front-Elektrode")
- als Lochinjektionsschicht bzw. anodische Pufferschicht oder als transparente Anoden in organischen/polymeren Leuchtdioden oder Solarzellen

Die Erfindung soll durch die nachfolgend angeführten Ausführungsbeispiele näher erläutert werden, wobei diese in keiner Weise als den Umfang der Erfindung begrenzend verstanden werden sollen.

### Beispiel 1 (Stufe (a))

Die zur Temperatursteuerung notwendige Kühlung wurde mit Kühlraten von mindestens 0,02 K/min, vorzugsweise 0,05 K/min erhalten. Die Kühlraten wurden duch Messung der Temperaturänderung bei aktivierter Kühlung an den jeweils verwendeten Reaktoren bestimmt, ohne dass die Reaktion in Gang gesetzt wurde.

300 ml Anilin wurde mittels 960 g Ammoniumperoxodisulfat (in Wasser gelöst) in Gegenwart von 1960 g p-Toluolsulfonsäure (pTs) in 9,5 l Wasser zu Polyanilin, das somit mit pTs "dotiert" ist, polymerisiert. Die Starttemperatur der Reaktion betrug 17,5 °C. Die Zugabe der Reaktanden erfolgte so, dass die Temperatur nicht um mehr als 5 °C anstieg und die Geschwindigkeit des Temperaturanstieg unterhalb von 1K/min. lag. Das ausgefallene rohe Polymer wurde gefiltert und dreimal mit 10%iger wässriger pTs-Lösung gewaschen, wonach jeweils filtriert wurde.
Ausbeute: 210-330 g, Leitfähigkeit (getrocknetes Pulver, kalt gepreßt): ca. 5 S/cm.

### Beispiel 2a (Stufe(b))

Polyanilin wie in Beispiel 1 hergestellt wurde als trockenes Pulver mit den in der nachfolgenden Tabelle verwendeten Stoffen in dem jeweils angegebenen Verhältnis in einem Laborschnellmischer 3 Minuten lang intensiv dispergiert.

| **Nr.** | **Dispersionshilfsstoff** | **Verhältnis PAni: Dispersionshilfsstoff** | **Leitfähigkeit S/cm** |
|---|---|---|---|
| 2.1 | Butyrolacton | 1:0,5 | 30 |
| 2.2 | Butyrolacton | 1:1 | 40 |
| 2.3 | Butyrolacton | 1:2 | 65 |
| 2.4 | Paliotolgelb K0961 | 3:1 | 25 |
| 2.5 | n-Methyl-2-pyrrolidon | 3:1 | 30 |

### Beispiel 2b (Stufe (b))

Das gemäß Beispiel 1 gewonnene Pulver wurde in einem Laborkneter mit PMMA in der Schmelze bei 90 °C dispergiert. Dabei wurde eine Polyanilin-Konzentration von ca. 40 Gew.-%, bezogen auf das Blend aus Polyanilin und Polymethylenmethacrylat, verwendet.

Nach dem Abkühlen zeigt das Polymerblend in der Regel eine Leitfähigkeit von 60 (+/- 20) S/cm.

### Beispiel 3 (Nachbehandlung/Konditionierung)

200 g einer Vordispersion aus Beispiel 2 wurden in einer Wirbelschichtextraktionsanlage mit 1 l Xylol extrahiert. Dabei wurden ca. 400 g mit einem Restfeuchtegehalt von 70 Gew.-% erhalten.

### Beispiel 4 (Stufe (c))

200 g Extraktionsrückstand aus Beispiel 3 wurden mit 600 g Xylol in einer Perlmühle 2,5 Stunden lang dispergiert. Es wurde eine hochviskose Paste mit einem Polyanilingehalt von ca. 4 Gew.-% erhalten.

### Beispiel 5 (Nachbehandlung (Formulierung) und Formgebung)

10 g Paste aus Beispiel 4 wurde mit 10 g Dichloressigsäure und 10 g Dichlormethan unter Rühren verdünnt und in einer Spincoatinganlage mit einer Umdrehungszahl von 1500 U/min auf ein Glassubstrat aufgebracht. Es ergab sich nach Trocknung eine Schichtdicke von 150 nm mit einer Leitfähigkeit von 220 S/cm.

### Beispiel 6 (Nachbehandlung / Konditionierung)

50 g einer Vordispersion aus Beispiel 2 wurden in einem Glaskolben 10 Minuten lang mit 300 ml Chlorbenzol gewaschen. Die Mischung wurde filtriert. Es wurde ein feuchter Rückstand mit einem Festkörpergehalt von 40 Gew.-% und einer rechnerischen Polyanilin-Konzentration von ca. 0,15 Gew.-% erhalten.

### Beispiel 7 (Stufe (c))

0,2 g Filtrierrückstand aus Beispiel 6 wurden unter Ultraschall mit 10 ml Chlorphenol vermischt und 20 min mit einer Energiedichte von 500 W/m² beschallt. Es ergab sich eine stabile Dispersion.

### Beispiel 8 (Nachbehandlung (Formulierung) und Formgebung)

Die Dispersion aus Beispiel 7 wurde mit 10 ml Chlorphenol verdünnt und hiervon 8 ml in eine Petrischale gegossen. Die Schale wurde bei einer Temperatur von 50 °C über 6 Stunden getrocknet. Es ergab sich ein freitragender Film von 25 µm Schichtdicke und einer Leitfähigkeit von 540 S/cm.

## Patentansprüche

1. Verfahren zur Herstellung einer Dispersion, die Teilchen mindestens eines intrinsisch leitfähigen Polymers, ausgewählt aus der Gruppe bestehend aus Polyanilin und Poly(3,4-ethylendioxythiophen) enthält, wobei die Teilchengröße im Mittel (Gewicht) weniger als 1 µm beträgt, **dadurch gekennzeichnet, dass** das Dispersionsmittel bei Raumtemperatur eine Flüssigkeit mit einer relativen Viskosität von < 10.000 ist und eine aus dieser Dispersion gebildete Schicht, Folie oder Platte nach Entfernen des Dispersionsmittels eine Leitfähigkeit von > 100 S/cm aufweist, bei welchem Verfahren in dieser Reihenfolge
(a) aus Monomeren ein intrinsisch leitfähiges Polymer hergestellt wird, wobei die Temperatur während der Polymerisation so geregelt wird, dass sie nicht über einen Wert von mehr als 5°C oberhalb der Starttemperatur ansteigt und die Geschwindigkeit des Temperaturanstiegs während Stufe (a) zu keiner Zeit während der Polymerisation mehr als 1 K/Minute beträgt,
(b) das Produkt aus Stufe (a) in Gegenwart eines gegenüber dem leitfähigen Polymer inerten, nicht elektrisch leitfähigen, nicht-polymeren polaren Stoffes unter Anwendung ausreichender Scherkräfte aufgerieben und/oder dispergiert wird, wobei das Gewichtsverhältnis zwischen dem leitfähigen Polymer und dem polaren Stoff 2:1 bis 1:10 beträgt,
(c) das Produkt aus Stufe (b) in einem bei Raumtemperatur flüssigen Dispersionsmittel mit einer relativen Viskosität von <10.000 dispergiert wird, wobei das Gewichtsverhältnis zwischen dem leitfähigen Polymer und dem Dispersionsmittel kleiner als 1:10 ist.

2. Verfahren nach Anspruch 1, **dadurch gekennzeichnet, dass** die Leitfähigkeit mindestens 200 S/cm beträgt.

3. Verfahren nach einem der Ansprüche 1 bis 2, **dadurch gekennzeichnet, dass** in Stufe (b) ferner mindestens ein nicht-leitfähiges Polymer vorhanden ist.

4. Verfahren nach Anspruch 3, **dadurch gekennzeichnet, dass** das nicht-leitfähige Polymer ein thermoplastisches Polymer ist.

5. Verfahren nach einem der Ansprüche 1 bis 4, **dadurch gekennzeichnet, dass** das Produkt aus Stufe (b) einer Nachbehandlung unterworfen wird.

6. Verfahren nach Anspruch 5, **dadurch gekennzeichnet, dass** der Anteil des polaren Stoffes oder des nicht-leitfähigen Polymers im Produkt aus Stufe (b) während der Nachbehandlung durch Waschen oder Extrahieren vermindert wird.

7. Verfahren nach einem der Ansprüche 1 bis 6, **dadurch gekennzeichnet, dass** Lösemittel und/oder Hilfsstoffe zugesetzt werden, die die nachfolgende Dispergierstufe (c) unterstützen.

8. Verfahren nach einem der Ansprüche 1 bis 7, **dadurch gekennzeichnet, dass** das Produkt aus Stufe (c) einer Nachbehandlung unterworfen wird.

9. Verfahren nach einem der Ansprüche 1 bis 8, **dadurch gekennzeichnet, dass** Viskositätsregler, Benetzungshilfen, Matrixpolymere, Stabilisatoren, Vernetzungshilfsmittel, Verdunstungsregler und/oder andere Hilfs- und Zusatzstoffe, die ein sich gegebenenfalls anschließendes Formgebungsverfahren unterstützen, zugesetzt werden.

10. Verfahren nach Anspruch 9, **dadurch gekennzeichnet, dass** der Zusatz vor oder während Stufe (c) erfolgt.

11. Verfahren nach einem der Ansprüche 1 bis 10, **dadurch gekennzeichnet, dass** bei der Nachbehandlung des Produkts aus Stufe (b) und/oder während Dispergierstufe (c) ein organisches Lösemittel verwendet wird, das eine Oberflächenspannung von mehr als 25 mN/m aufweist.

12. Verfahren nach einem der Ansprüche 1 bis 11, **dadurch gekennzeichnet, dass** sich die Konzentration des leitfähigen Polymers während der Nachbehandlung des Produkts aus Stufe (b) um mindestens 5 Gew.-%, bezogen auf die bei Raumtemperatur festen Bestandteile, erhöht.

13. Verfahren nach einem der Ansprüche 1 bis 12, **dadurch gekennzeichnet, dass** die Dispergierstufe(n) in einer Dispergiervorrichtung ausgewählt aus der Gruppe bestehend aus einer Kugelmühle, einer Perlmühle, einem Dreiwalzenstuhl und einer Hochdruckdispergiervorrichtung durchgeführt wird bzw. werden.

14. Verfahren nach einem der Ansprüche 1 bis 12, **dadurch gekennzeichnet, dass** das Dispergieren unter Ultraschall durchgeführt wird.

## Claims

1. A process for the preparation of a dispersion, which contains particles of at least one intrinsically conductive polymer selected from the group consisting of polyaniline and poly(3,4-ethylenedioxythiophene), wherein the particle size is on average (weight) less than 1 µm, **characterized in that** the dispersant at room temperature is a liquid having a relative viscosity of < 10,000, and a layer, film or sheet formed from this dispersion has a conductivity of > 100 S/cm after removal of the dispersant, in which process in this sequence
(a) intrinsically conductive polymer is prepared from monomers, wherein the temperature during the polymerization is controlled so that said temperature does not exceed a value of more than 5 °C above the starting temperature and at no time during the polymerization the rate of the temperature rise during stage (a) is more than 1 K/minute;
(b) the product from stage (a) is triturated and/or dispersed in the presence of a non-electrically conductive, non-polymeric polar substance, which is inert vis-a-vis said conductive polymer, applying adequate shearing forces, wherein the weight ratio between said conductive polymer and said polar substance is 2:1 to 1:10;
(c) the product from stage (b) is dispersed in a dispersant being liquid at room temperature and having a relative viscosity of < 10,000, wherein the weight ratio between said conductive polymer and said dispersant is less than 1:10.

2. The process according to claim 1 **characterized in that** the conductivity is at least 200 S/cm.

3. The process according to any one of claims 1 to 2 **characterized in that** in stage (b), furthermore, at least one non-conductive polymer is present.

4. The process according to claim 3 **characterized in that** said non-conductive polymer is a thermoplastic polymer.

5. The process according to any one of claims 1 to 4 **characterized in that** the product from stage (b) is subjected to a post-treatment.

6. The process according to claim 5 **characterized in that** the portion of the polar substance or of the non-conductive polymer in the product from stage (b) is reduced during the post-treatment by washing or extraction.

7. The process according to any one of claims 1 to 6 **characterized in that** solvents and/or auxiliaries are added which support the subsequent dispersion stage (c).

8. The process according to any one of claims 1 to 7 **characterized in that** the product from stage (c) is subjected to a post-treatment.

9. The process according to any one of claims 1 to 8 **characterized in that** viscosity regulators, wetting aids, matrix polymers, stabilizers, cross-linking auxiliaries, evaporation regulators and/or other auxiliaries and additives are added, which support an optionally following shaping process.

10. The process according to claim 9 **characterized in that** the addition takes place before or during stage (c).

11. The process according to any one of claims 1 to 10 **characterized in that** during the post-treatment of the product of stage (b) and/or during dispersion stage (c) an organic solvent is used which has a surface tension of more than 25 mN/m.

12. The process according to any one of claims 1 to 11 **characterized in that** the concentration of the conductive polymer increases during the post-treatment of the product from stage (b) by at least 5 wt.-%, relative to the constituents solid at room temperature

13. The process according to any one of claims 1 to 12 **characterized in that** the dispersion stage(s) is or are carried out in a dispersion device selected from the group consisting of a ball mill, a bead mill, a three-roll mill and a high-pressure dispersion device.

14. The process according to any one of claims 1 to 12 **characterized in that** the dispersion is carried out under ultrasound.

## Revendications

1. Procédé de préparation d'une dispersion comprenant des particules d'au moins un polymère intrinsèquement conducteur, choisi dans le groupe constitué par la polyaniline et le poly(3,4-éthylènedioxythiophène), la taille de particules étant en moyenne (en poids) inférieure à 1 µm, **caractérisé en ce que** l'agent de dispersion est un liquide ayant une viscosité relative de < 10 000 à température ambiante et **en ce qu'**une couche, feuille ou plaque formée à partir de cette dispersion présente après élimination de l'agent de dispersion une conductivité de > 100 S/cm, procédé au cours duquel on effectue les étapes suivantes dans cet ordure :
(a) préparation, à partir de monomères, d'un polymère intrinsèquement conducteur, la température pendant la polymérisation étant ajustée de telle sorte qu'elle ne monte pas au-delà d'une valeur de plus de 5°C au-dessus de la température de départ et que la vitesse de la montée en température pendant l'étape (a) ne soit à aucun moment pendant la polymérisation supérieure à 1 K/minute,
(b) abrasion et/ou dispersion du produit de l'étape (a) en présence d'une substance polaire non polymère, non conductrice électriquement, inerte vis-à-vis du polymère conducteur, en le soumettant à des forces de cisaillement suffisantes, le rapport en poids entre le polymère conducteur et la substance polaire étant de 2:1 à 1:10,
(c) dispersion du produit de l'étape (b) dans un agent de dispersion liquide à température ambiante ayant une viscosité relative de < 10 000, le rapport en poids entre le polymère conducteur et l'agent de dispersion étant inférieur à 1:10.

2. Procédé selon la revendication 1, **caractérisé en ce que** la conductivité est d'au moins 200 S/cm.

3. Procédé selon une des revendications 1 et 2, **caractérisé en ce qu'**au moins un polymère non conducteur est en outre présent à l'étape (b).

4. Procédé selon la revendication 3, **caractérisé en ce que** le polymère non conducteur est un polymère thermoplastique.

5. Procédé selon une des revendications 1 à 4, **caractérisé en ce que** le produit de l'étape (b) est soumis à un post-traitement.

6. Procédé selon la revendication 5, **caractérisé en ce que** la proportion de substance polaire ou du polymère non conducteur dans le produit de l'étape (b) est réduite par lavage ou extraction pendant le post-traitement.

7. Procédé selon une des revendications 1 à 6, **caractérisé en ce que** des solvants et/ou des auxiliaires, qui favorisent l'étape de dispersion (c) consécutive, sont ajoutés.

8. Procédé selon une des revendications 1 à 7, **caractérisé en ce que** le produit de l'étape (c) est soumis à un post-traitement.

9. Procédé selon une des revendications 1 à 8, **caractérisé en ce que** des modificateurs de viscosité, des agents mouillants, des polymères matriciels, des stabilisants, des auxiliaires de réticulation, des modificateurs d'évaporation et/ou d'autres additifs et auxiliaires, qui favorisent un procédé de formage s'adjoignant éventuellement, sont ajoutés.

10. Procédé selon la revendication 9, **caractérisé en ce que** l'addition s'effectue avant ou pendant l'étape (c).

11. Procédé selon une des revendications 1 à 10, **caractérisé en ce qu'**un solvant organique, qui présente une tension superficielle de plus de 25 mN/m, est utilisé lors du post-traitement du produit de l'étape (b) et/ou pendant l'étape de dispersion (c).

12. Procédé selon une des revendications 1 à 11, **caractérisé en ce que** la concentration du polymère conducteur augmente pendant le post-traitement du produit de l'étape (b) d'au moins 5 % en poids, par rapport aux composants solides à température ambiante.

13. Procédé selon une des revendications 1 à 12, **caractérisé en ce que** la ou les étapes de dispersion est ou sont réalisées dans un dispositif de dispersion choisi dans le groupe constitué par un broyeur à boulets, un broyeur à perles, un broyeur à trois cylindres, et un dispositif de dispersion haute pression.

14. Procédé selon une des revendications 1 à 12, **caractérisé en ce que** la dispersion est réalisée sous bombardement aux ultrasons.
